# EUROPÄISCHE PATENTSCHRIFT

(11) **EP 0 431 388 B1**
(45) Veröffentlichungstag und Bekanntmachung des Hinweises auf die Patenterteilung: **04.08.1993**
(21) Anmeldenummer: 90122137.4
(22) Anmeldetag: 20.11.1990
(51) Int. Cl.: B29B 7/74

(54) **Verfahren und Vorrichtung zum Herstellen von Kunststoffen, insbesondere Schaumstoffen**
Method and device for making plastic, especially foamy materials
Procédé et dispositif pour la fabrication des matières plastiques en particulier mousseuses

(30) Priorität: 02.12.1989 DE 3939954
(43) Veröffentlichungstag der Anmeldung: 12.06.1991
(73) Patentinhaber: MASCHINENFABRIK HENNECKE GmbH, D-51379 Leverkusen (DE)
(72) Erfinder: Sulzbach, Hans-Michael, Dipl.-Ing., W-5330 Köningswinter 21 (DE)
(74) Vertreter: Drope, Rüdiger, Dr.

(56) Entgegenhaltungen:
- DE-A- 3 507 202
- DE-B- 1 153 153
- DE-C- 3 841 671
- FR-A- 2 267 191
- FR-A- 2 323 517
- FR-E- 71 522
- GB-A- 811 695
- US-A- 3 493 031
- US-A- 4 591 467

## Beschreibung

Aus DE 3 841 671-C1 (entsprechend EP 0 373 409-A1) ist ein Verfahren und eine Vorrichtung zum Herstellen von Kunststoffen, insbesondere Schaumstoffen, aus mindestens zwei fließfähigen, dosiert zugeführten Reaktionskomponenten bekannt, wobei mindestens eine der Reaktionskomponenten mit pulvrigem bis feinkörnigem oder faserigem Zusatzstoff in vorgegebenem Verhältnis im Durchlauf unter Druck in einer Vormischzone vorvermischt und danach mit der anderen Reaktionskomponente zusammengeführt, im Durchlauf vermischt und das Reaktionsgemisch ausreagieren gelassen wird, wobei der Zusatzstoff der Vormischzone verdichtet zugeführt, der Druck in der Vormischzone konstant gehalten und das Gemisch aus Reaktionskomponente und Zusatzstoff der anderen Komponente zum Vermischen dosiert zugeführt werden.

Dadurch werden nicht nur das Dosierverhältnis der Reaktionskomponenten, sondern auch dasjenige des Zusatzstoffes beim kontinuierlichen Arbeiten exakt eingehalten.

Es ist zwar möglich, den Zusatzstoff auf die maximale Packungsdichte zu komprimieren; dennoch verbleibt in den Zwischenräumen zwischen den Teilchen des Zusatzstoffes eine geringe Menge Restluft, die normalerweise nicht stört. Es gibt jedoch besondere Kunststoffe, insbesondere Schaumstoffe, bei deren Herstellung keine Luft den Reaktionskomponenten beigemischt werden darf.

Es besteht die Aufgabe, die eingangs beschriebene Technik so zu verbessern, daß die in den Zusatzstoffen enthaltene Restluft nicht mit in das Reaktionsgemisch gelangt.

Gelöst wird diese Aufgabe dadurch, daß dem Zusatzstoff nach der Verdichtung und vor dem Vermischen mit der Reaktionskomponente die Restluft durch Anlegen von Vakuum entzogen wird.

Auf diese Weise gelingt es, in den erforderlichen besonderen Fällen die Restluft nahezu vollständig zu entfernen, so daß sie nicht in das Reaktionsgemisch gelangen kann.

Die neue Vorrichtung zum Herstellen von Kunststoffen, insbesondere Schaumstoffen, aus mindestens zwei fließfähigen, dosiert zugeführten Reaktionskomponenten geht aus von Vorratsbehältern für die Reaktionskomponenten, von denen Zuleitungen über Dosierpumpen zu einem Mischkopf führen, und von einer Speiseschnecke zum dosierten Fördern von pulvrigem bis feinkörnigem Zusatzstoff, welche in einen in mindestens einer der Zuleitungen zwischen Dosierpumpe und Mischkopf angeordneten Vormischer mündet.

Dabei ist gemäß einer ersten Ausführungsform die Speiseschnecke als Verdichtungsschnecke ausgebildet, das Drehmoment ihres Antriebs einstellbar bzw. regelbar und in der Zuleitung zwischen Vormischer und Mischkopf ist eine weitere Dosierpumpe angeordnet. Gemäß einer zweiten Ausführungsform ist die Speiseschnecke ebenfalls als Verdichtungsschnecke ausgebildet, am Vormischer ist ein Drucksensor angeordnet, welcher mittels einer Signalleitung über einen Sollwertvergleicher und Drehzahlregler mit dem Antrieb der Verdichtungsschnecke verbunden ist und in der Zuleitung zwischen Vormischer und Mischkopf ist eine weitere Dosierpumpe angeordnet.

Als neu ist beiden Ausführungsformen gemeinsam, daß das Ende der Verdichtungsschnecke konzentrisch von einem Mikrofilter mit ringförmigem Absaugkanal umgeben ist, welcher mit einer Vakuumpumpe verbunden ist.

Dadurch wird erreicht, daß die im Zusatzstoff enthaltene Restluft durch das Mikrofilter hindurch abgesaugt wird, während die Teilchen des Zusatzstoffes davon zurückgehalten werden.

Als Mikrofilter eignen sich vorzugsweise poröse Sintermetalle bzw. poröse Kunststoffe.

Die Erfindung wird an Hand von zwei Ausführungsbeispielen der in der Zeichnung rein schematisch dargestellten Vorrichtung für die Herstellung von Polyurethan-Schaumstoff aus Polyol und Isocyanat nachstehend näher beschrieben. Es zeigen:
- Fig. 1: die Vorrichtung gemäß dem ersten Ausführungsbeispiel und
- Fig. 2: die Vorrichtung gemäß dem zweiten Ausführungsbeispiel.

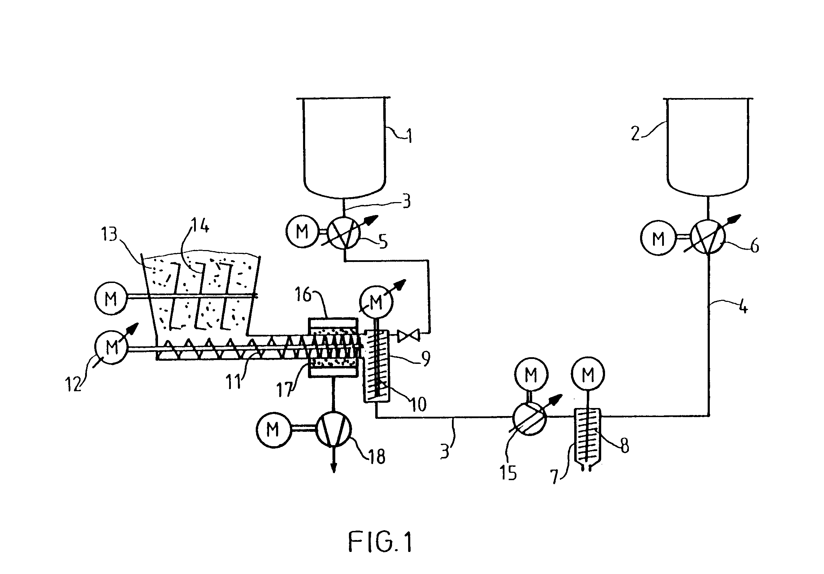

In Fig. 1 führen von Vorratsbehältern 1, 2 für Polyol und Isocyanat Zuleitungen 3, 4 über Dosierpumpen 5, 6 zu einem Mischkopf 7 mit Rührwerk 8. In der Zuleitung 3 ist ein Vormischer 9 mit Rührwerk 10 angeordnet. In den Vormischer 9 mündet eine Verdichtungsschnecke 11, welche einen drehmomenteinstellbaren bzw, -regelbaren Antrieb 12 aufweist. Dieser Verdichtungsschnecke 11 ist ein Aufgabetrichter 13 mit Auflockerungsrührer 14 vorgeordnet. Eine kurz vor dem Mischkopf 7 in der Zuleitung 3 angeordnete weitere Dosierpumpe ist mit 15 bezeichnet. Das Ende der Verdichtungsschnecke 11 ist von einem in einem Ringkanal 16 angeordneten Mikrofilter 17 aus Sintermetall umgeben. Dieser Ringkanal 16 ist mit einer Vakuumpumpe 18 verbunden.

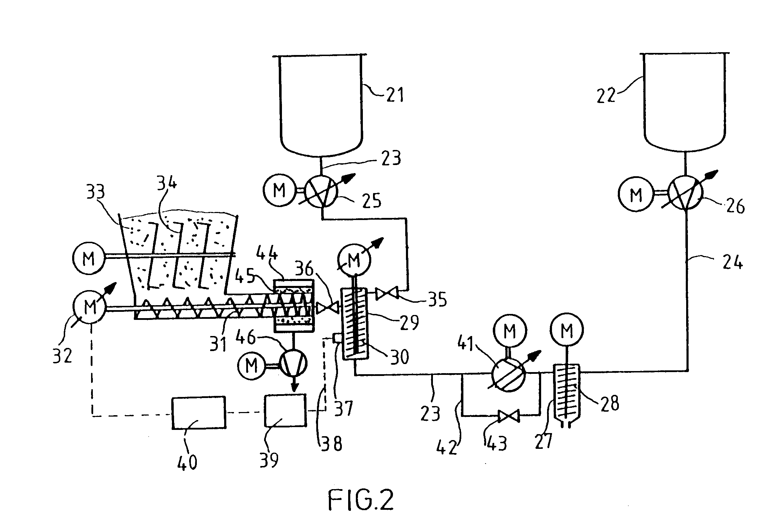

In Fig. 2 führen von Vorratsbehältern 21, 22 für Polyol und Isocyanat Zuleitungen 23, 24 über Dosierpumpen 25, 26 zu einem Mischkopf 27 mit Rührwerk 28. In der Zuleitung 23 ist ein Vormischer 29 mit Rührwerk 30 angeordnet. In den Vormischer 29 mündet eine Verdichtungsschnecke 31, welche einen drehzahlregelbaren Antrieb 32 aufweist. Dieser Verdichtungsschnecke 31 ist ein Aufgabetrichter 33 mit Auflockerungsrührer 34 vorgeordnet. Vor dem Vormischer 29 ist in der Zuleitung 23 ein Absperrventil 35 angeordnet. Zwischen der Verdichtungsschnecke 31 und dem Vormischer 29 ist ebenfalls ein Absperrventil 36 vorgesehen. Am Vormischer 29 ist ein Drucksensor 37 angeordnet, welcher mittels einer Signalleitung 38 über einen Sollwertvergleicher 39 und einen Drehzahlregler 40 mit dem Antrieb 32 der Verdichtungsschnecke 31 verbunden ist. Eine kurz vor dem Mischkopf 27 in der Zuleitung 23 angeordnete weitere Dosierpumpe ist mit 41 bezeichnet. Sie ist mittels einer By-Bass-Leitung 42 umgehbar, in der ein Absperrventil 43 angeordnet ist. Das Ende der Verdichtungsschnecke 31 ist von einem in einem Ringkanal 44 angeordneten Mikrofilter 45 aus porösem Kunststoff umgeben. Dieser Ringkanal 44 ist mit einer Vakuumpumpe 46 verbunden.

### Verfahrensbeispiel

Benutzt wird die Vorrichtung gemäß Fig. 2. Bei geschlossenem Absperrventil 36 und geöffneten Absperrventilen 35 und 43 werden mittels der Dosierpumpen 25, 41 und 26 und den Vorratsbehältern 21, 22 über die Zuleitungen 23, 24 18 kg/min Polyol bzw. 7 kg/min Isocyanat gefördert. Die Verdichtungsschnecke 31 rotiert mit 125 U/min, so daß der Zusatzstoff (Melaminpulver) verdichtet wird. Die Vakuumpumpe erzeugt einen Druck von 0,2 bar (abs). Hat sich in der Verdichtungsschnecke 31 eine Verdichtung und im Vormischer ein Druck aufgebaut, werden das Absperrventil 36 geöffnet und das Absperrventil 43 geschlossen. Sodann dosiert die Verdichtungsschnecke 31 18 kg/min Melaminpulver in den Vormischer 29. Dieser wird mit Polyol beschickt. Das Rührwerk 30 rotiert mit 3.000 U/min. Im Vormischer 29 herrscht ein Druck von 2 bar (abs.), welcher dem Solldruck entspricht. Die Dosierpumpe 41 dosiert 36 kg/min des im Vormischer 29 erzeugten Gemisches in den Mischkopf 27, dessen Rührwerk 28 mit 4.000 U/min umläuft. Der Mischdruck im Mischkopf 27 beträgt 1,5 bar (abs.) Der fertige Schaumstoff zeigt eine außerordentlich homogene Verteilung des Melaminpulvers. Sinkt der Druck, wird die Drehzahl der Verdichtungsschnecke 31 durch die Regelung erhöht, wodurch der Verdichtungsgrad wieder auf den Sollwert ansteigt ebenso wie der Druck. Steigt der Druck an, wird die Drehzahl heruntergeregelt, so daß der Verdichtungsgrad auf den Sollwert sinkt ebenso wie der Druck.

## Patentansprüche

1. Verfahren zum Herstellen von Kunststoffen, insbesondere Schaumstoffen, aus mindestens zwei fließfähigen, dosiert zugeführten Reaktionskomponenten, bei dem mindestens eine der Reaktionskomponenten mit pulvrigem bis feinkörnigem oder faserigem Zusatzstoff in vorgegebenem Verhältnis im Durchlauf unter Druck in einer Vormischzone (9, 29) vorvermischt und danach mit der anderen Reaktionskomponente zusammengeführt, im Durchlauf vermischt und das Gemisch ausreagieren gelassen wird, wobei der Zusatzstoff der Vormischzone (9, 29) verdichtet zugeführt, der Druck in der Vormischzone (9, 29) konstant gehalten und das Gemisch aus Reaktionskomponente und Zusatzstoff der anderen Reaktionskomponente zum Vermischen dosiert zugefördert werden, dadurch gekennzeichnet, daß dem Zusatzstoff nach dem Verdichten und vor dem Vermischen mit der Reaktionskomponente die Restluft durch Anlegen von Vakuum entzogen wird.

2. Vorrichtung zum Herstellen von Kunststoffen, insbesondere Schaumstoffen, aus mindestens zwei fließfähigen, dosiert zugeführten Reaktionskomponenten, bestehend aus Vorratsbehältern (1, 2) für die Reaktionskomponenten, von denen Zuleitungen (3, 4) über Dosierpumpen (5, 6) zu einem Mischkopf (7) führen, und aus einer Speiseschnecke (11) zum dosierten Fördern von pulvrigem bis feinkörnigem oder faserigem Zusatzstoff, welche in einem in mindestens einer der Zuleitungen (3, 4) zwischen Dosierpumpe (5) und Mischkopf (7) angeordneten Vormischer (9) mündet, wobei die Speiseschnecke (11) als Verdichtungsschnecke (11) ausgebildet ist; das Drehmoment ihres Antriebes (12) einstellbar bzw. regelbar ist und in der Zuleitung (3) zwischen Vormischer (9) und Mischkopf (7) eine weitere Dosierpumpe (51) angeordnet ist, dadurch gekennzeichnet, daß das Ende der Verdichtungsschnecke (11) konzentrisch von einem Mikrofilter (17) mit ringförmigem Absaugkanal (16) umgeben ist, welcher mit einer Vakuumpumpe (18) verbunden ist.

3. Vorrichtung zum Herstellen von Kunststoffen, insbesondere Schaumstoffen, aus mindestens zwei fließfähigen, dosiert zugeführten Reaktionskomponenten, bestehend aus Vorratsbehältern (21, 22) für die Reaktionskomponenten, von denen Zuleitungen (23, 24) über Dosierpumpen (25, 26) zu einem Mischkopf (27) führen, und aus einer Speiseschnecke (31) zum dosierten Fördern von pulvrigem bis feinkörnigem oder faserigem Zusatzstoff, welche in einen in mindestens einer der Zuleitungen (23, 24) zwischen Dosierpumpe (25) und Mischkopf (27) angeordneten Vormischer (29) mündet, wobei die Speiseschnecke (31) als Verdichtungsschnecke (31) ausgebildet ist; am Vormischer (29) ein Drucksensor (37) angeordnet ist, welcher mittels einer Signalleitung (38) über einen Sollwertvergleicher (39) und Drehzahlregler (40) mit dem Antrieb (32) der Verdichtungsschnecke (31) verbunden ist, und wobei in der Zuleitung (23) zwischen Vormischer (29) und Mischkopf (27) eine weitere Dosierpumpe (41) angeordnet ist, dadurch gekennzeichnet, daß das Ende der Verdichtungsschnecke (31) konzentrisch von einem Mikrofilter (45) mit ringförmigem Absaugkanal (44) umgeben ist, welcher mit einer Vakuumpumpe (46) verbunden ist.

4. Vorrichtung nach Anspruch 2 oder 3, dadurch gekennzeichnet, daß das Mikrofilter (17, 45) aus porösem Sintermetall oder porösem Kunststoff besteht.

## Claims

1. A method of producing plastics, in particular foamed plastics, from at least two flowable reactants which are supplied in dosed fashion, wherein at least one of the reactants is continuously premixed with a powdery to fine-grained or fibrous additive in a predetermined ratio under pressure in a premixing zone (9, 29) and is then combined with the other reactant and continuously mixed, whereupon the mixture is allowed to react, where the additive is supplied to the premixing zone (9, 29) in compressed form, the pressure in the premixing zone (9, 29) is maintained constant, and the mixture of reactant and additive is conveyed in dosed form to the other reactant for mixing, characterised in that after the compression and prior to the mixing with the reactant, the residual air is extracted from the additive by the connection of a vacuum.

2. A device for the production of plastics, in particular foamed plastics, from at least two flowable reactants supplied in dosed fashion, comprising supply containers (1, 2) for the reactants, from which supply lines (3, 4) lead via dosing pumps (5, 6) to a mixing head (7), and comprising a feeding screw (11) for the dosed conveyance of a powdery to fine-grained or fibrous additive, which feeding screw leads into a premixer (9) arranged in at least one of the supply lines (3, 4) between the dosing pump (5) and the mixing head (7), where the feeding screw (11) has the form of a compression screw (11), the torque of its drive mechanism (12) is adjustable and regulatable, and a further dosing pump (51) is arranged in the supply line (3) between the premixer (9) and the mixing head (7), characterised in that the end of the compression screw (11) is concentrically surrounded by a microfilter (17) with an annular suction channel (16) which is connected to a vacuum pump (18).

3. A device for the production of plastics, in particular foamed plastics, from at least two flowable reactants supplied in dosed fashion, comprising supply containers (21, 22) for the reactants, from which supply lines (23, 24) lead via dosing pumps (25, 26) to a mixing head (27), and comprising a feeding screw (31) for the dosed conveyance of a powdery to fine-grained or fibrous additive, which feeding screw (31) leads into a premixer (29) arranged in at least one of the supply lines (23, 24) between the dosing pump (25) and the mixing head (27), where the feeding screw (31) has the form of a compression screw (31), where a pressure sensor (37) connected by a signal line (38) to the drive mechanism (32) of the compression screw (31) via a theoretical value comparator (39) and a speed regulator (40) is arranged on the premixer (29), and where a further dosing pump (41) is arranged in the supply line (23) between the premixer (29) and the mixing head (27), characterised in that the end of the compression screw (31) is concentrically surrounded by a microfilter (45) with an annular suction channel (44) which is connected to a vacuum pump (46).

4. A device as claimed in Claim 2 or 3, characterised in that the microfilter (17, 45) consists of porous sintered metal or porous plastics material.

## Revendications

1. Procédé de production de matières plastiques, notamment de matières cellulaires, à partir d'au moins deux composants réactifs fluides amenés en quantités dosées, dans lequel au moins l'un des composants réactifs est préalablement mélangé sous pression au passage dans une zone de prémélange (9, 29) dans un rapport prédéterminé, avec un additif en poudre ou à grains fins ou un additif fibreux, puis il est rassemblé avec les autres composants réactifs, mélangé au passage et le mélange est abandonné à la réaction totale, l'additif de la zone de prémélange (9, 29) étant amené à l'état comprimé, la pression dans la zone de prémélange (9, 29) étant maintenue constante et le mélange du composant réactif et de l'additif étant amené en quantité dosée à l'autre composant réactif en vue de leur mélange, caractérisé en ce qu'après la compression et avant le mélange avec le composé réactionnel, l'air restant est extrait de l'additif par l'application d'un vide.

2. Dispositif pour la production de matières plastiques, notamment de matières cellulaires, à partir d'au moins deux composants réactifs fluides amenés en quantité dosée, constitué de réservoirs (1, 2) pour les composants réactifs, desquels des conduits d'amenée (3, 4) mènent par l'intermédiaire de pompes doseuses (5, 6) à une tête mélangeuse (7), et d'au moins une vis sans fin d'alimentation (11) servant au transport dosé d'additif en poudre ou à grains fins ou en fibres, qui débouche dans un prémélangeur (9) disposé dans au moins l'un des conduits d'amenée (3, 4) entre la pompe doseuse (5) et la tête mélangeuse (7), la vis sans fin d'alimentation (11) étant réalisée comme vis de compression (11) ; le moment de torsion de sa commande (12) pouvant être mis au point ou étant réglable et une autre pompe doseuse (51) est disposée dans le conduit d'amenée (3) entre le prémélangeur (9) et la tête mélangeuse (7), caractérisé en ce que l'extrémité de la vis sans fin de compression (11) est entourée concentriquement d'un microfiltre (17) à canal annulaire de succion (16) qui est relié à une pompe à vide (18).

3. Dispositif de production de matières plastiques, notamment de matières cellulaires, à partir d'au moins deux composants réactifs fluides, amenés en quantité dosée, constitué de réservoirs (21, 22) pour les composants réactifs, desquels des conduits d'amenée (23, 24) mènent par l'intermédiaire de pompes doseuses (25, 26) à une tête mélangeuse, et d'une vis sans fin d'alimentation (31) servant au transport dosé d'additif en poudre ou à grains fins ou en fibres, qui débouche dans un prémélangeur (29) disposé dans l'un au moins des conduits d'amenée (23, 24) entre la pompe doseuse (25) et la tête mélangeuse (27), la vis sans fin d'alimentation (31) étant réalisée comme vis sans fin de compression (31) ; le prémélangeur (29) portant un détecteur de pression (37) qui est lié au moyen d'un conduit de signaux (38) par l'intermédiaire d'un comparateur (39) à valeur théorique et d'un régulateur (40) de vitesse de rotation avec la commande (32) de la vis sans fin de compression (31), et une autre pompe doseuse (41) étant disposée dans le conduit d'amenée (23) entre le prémélangeur (29) et la tête mélangeuse (27), caractérisé en ce que l'extrémité de la vis de compression (31) est entourée concentriquement d'un microfiltre (45) à canal de succion (44) annulaire, qui est lié à une pompe à vide (46).

4. Dispositif suivant la revedication 2 ou 3, caractérisé en ce que le microfiltre (17, 45) est réalisé en un métal fritté poreux ou en une matière plastique poreuse.
